# EUROPÄISCHE PATENTSCHRIFT

(11) **EP 0 359 030 B1**
(45) Veröffentlichungstag und Bekanntmachung des Hinweises auf die Patenterteilung: **29.12.1993**
(21) Anmeldenummer: 89115976.6
(22) Anmeldetag: 30.08.1989
(51) Int. Cl.: B25B 15/02, B25B 23/16, B25G 1/10

(54) **Feinschraubendreher**
Precision screw driver
Tournevis

(30) Priorität: 10.09.1988 DE 3830860
(43) Veröffentlichungstag der Anmeldung: 21.03.1990
(73) Patentinhaber: Wera-Werk Hermann Werner GmbH & Co., D-42349 Wuppertal (DE)
(72) Erfinder: Lieser, Karl, D-5600 Wuppertal 1 (DE); Kern, Peter, Dr. Ing., D-7000 Stuttgart 1 (DE); Schindhelm, Roland, D-7000 Stuttgart 40 (DE); Solf, Johannes, D-7032 Sindelfingen (DE)
(74) Vertreter: Rieder, Hans-Joachim, Dr.

(56) Entgegenhaltungen:
- EP-A- 0 185 468
- CA-A- 1 214 953
- DE-A- 3 004 957
- DE-A- 3 151 870
- FR-A- 2 557 489
- GB-A- 2 017 560
- GB-A- 2 136 726
- GB-A- 2 137 545
- US-A- 2 629 413
- US-A- 4 290 465

## Beschreibung

Die Erfindung betrifft einen Feinschraubendreher gemäß dem Gattungsbegriff des Anspruchs 1.

Schraubendreher gehören zu den weitest verbreiteten Handwerkzeugen. Sie finden in drei großen Anwendungsgebieten Verwendung. Das erste, klassische Anwendungsgebiet ist dort gegeben, wo Schrauben über praktisch den gesamten Schraubweg mit hohem Drehmoment und teilweise auch hoher axialer Kraft eingeschraubt werden. Ein Beispiel ist das Einschrauben einer Schraube mit Holzgewinde in einen Balken. Ein weiteres Beispiel ist das Einschrauben einer Schraube in einen Dübel. Gemeinsames Merkmal aller dieser Anwendungsgebiete ist die Notwendigkeit, ein hohes Drehmoment auf die Schraube auszuüben, das von der Hand über Kupplungsflächen in den Schraubendrehergriff geleitet werden muß.

Ein zweites, vollständig anders geartetes Anwendungsgebiet ist das Einschrauben von sehr kleinen, mit Feingewinden versehenen Schrauben in Gewindebohrungen. Ein Beispiel hierfür sind die Schrauben, mit denen die Brillengestelle zusammengeschraubt sind, oder auch Schrauben in Uhren. Hier besteht das Problem nicht in der Aufbringung der Drehmomente, sondern darin zu verhindern, daß die Schrauben beim Festziehen beschädigt werden.

Ein drittes großes Gebiet ist das Einschrauben von Schrauben mittlerer Größe in Gewindebohrungen, wie es beispielsweise im Handwerksbereich, in der industriellen Feinwerktechnik, dem Kleingerätebau, der Elektro- und Elektronikmontage und auch im Hobby- und Bastelbereich vorkommt. Gemeinsames Merkmal ist hier, daß zum einen lange Schraubwege vorhanden sind, bei denen andererseits praktisch über die gesamte Länge nur ein sehr geringes Drehmoment aufzubringen ist. Ein höheres Drehmoment muß erst am Ende des Schraubweges zum eigentlichen Festziehen der Schraube aufgebracht werden bzw. beim Lösen am Anfang des Schraubweges. Die aufzubringenden Drehmomente sind immer noch wesentlich kleiner als die beim erstgenannten Anwendungsbeispiel aufzubringenden Drehmomente, und müssen nur während eines verschwindend geringen Drehbereiches aufgebracht werden.

Zu diesem Anwendungsbereich gehören auch Schrauben, die in eine bestimmte Position bewegt werden müssen. Hierzu gehören beispielsweise Einstellvorgänge, deren Ergebnis an einem Meßgerät abgelesen werden kann. In diesen Bereich gehören aber auch sogenannte Tracking-Aufgaben, bei denen die Position der Schraube nachgeführt werden soll.

Für das erste Anwendungsgebiet gibt es im Stand der Technik eine sehr große Anzahl von Schraubendrehern, die man vereinfacht als Kraftschraubendreher bezeichnen kann. Sie sind im Hinblick auf eine gute Kraftübertragung zur Erzielung des notwendigen Drehmomentes in ihrer Form optimiert und werden so benutzt, daß die Hand mit ihren Fingern fest am Griff liegt und die Drehung durch Drehen des Handgelenks aufgebracht wird, so daß also keine Relativbewegung zwischen der Hand und dem Griff auftritt. Man nennt diese Bewegungsart auch fingerstatisch, da die Finger statisch am Griff anliegen. Üblicherweise haben Kraftschraubendreher einen sechseckigen Querschnitt, der sich in Richtung auf beide Enden pyramidenstumpfförmig verjüngt, wobei die Übergänge der Fingerform angepaßt sind. Die Seiten des Pyramidenstumpfes können mit konkaven Auskehlungen versehen sein. Die Stelle größten Durchmessers des Griffs liegt dabei üblicherweise deutlich näher am Griffende als am klingenseitigen Ende des Griffs.

Für das Gebiet der kleinen mit Feingewinde versehenen Schrauben gibt es sogenannte Uhrmacherschraubendreher, die in ihrem Griffbereich zylindrisch sind und eine starke Längsverrippung aufweisen.

Ein gattungsgemäßer Schraubendreher ist aus der US-PS 4 290 465 bekannt. Bei diesem Schraubendreher sind Kegelstumpf-Griffabschnitte vorhanden, deren Grundflächen einander zugewandt sind. Die Grundflächen haben unterschiedliche Durchmesser, so daß im Übergangsbereich ein Durchmessersprung unter Ausbildung einer kurzen Übergangsstufe entsteht. Der größte Teil des Griffbereiches wird dabei von dem der Klinge abgewandten Kegelstumpf-Griffabschnitt ausgebildet. Die von der Kreisform abweichende Querschnittsfläche der Griffabschnitte ermöglicht zwar eine gute Drehmomentübertragung, das Feineindrehen von Schrauben wird jedoch durch diese Geometrie nachteilhaft beeinflußt.

Der Erfindung liegt daher die Aufgabe zugrunde, einen Feinschraubendreher zu schaffen, der den bei diesem Anwendungsgebiet auftretenden Anforderungen bzw. Anwendungsmöglichkeiten gerecht wird.

Zur Lösung schlägt die Erfindung den im Anspruch 1 angegebenen Gegenstand vor.

Die Unteransprüche stellen vorteilhafte Weiterbildungen der Erfindung dar.

Zufolge eines derartig ausgebildeten Schraubendrehers lassen sich alle Anforderungen, die beim Feindreher auftreten, erfüllen.

Diese Anforderungen lassen sich mit Schnelligkeit, Genauigkeit und Drehmoment bezeichnen. Unter Schnelligkeit ist zu verstehen, daß die Schrauben möglichst schnell eingeschraubt werden können. Ein typischer Anwendungsfall benötigt 10 volle Umdrehungen, bis die Schraube angezogen ist. Unter Genauigkeit ist sowohl die Genauigkeit einer zu erreichenden Position als auch die Genauigkeit beim Erreichen des Anzugsdrehmomentes zu verstehen. Das zu erreichende Anzugsdrehmoment muß innerhalb eines sehr kurzen Drehbereiches erreicht werden. Dabei soll im letzten Drehbereich oder auch beim Lösen der Schraube anfangs immerhin noch ein Drehmoment erreicht werden, das bspw. bei 1,5 Newtonmeter (Nm) liegt. Obwohl diese Anforderungen wechselseitig Gegensätze sind, erfüllt der von der Erfindung vorgeschlagene Schraubendreher diese Ziele.

In Weiterbildung der Erfindung kann vorgesehen sein, daß der Öffnungswinkel des der Klinge zugeordneten Griffabschnitts zwischen 0° und etwa 8° liegt. Unter Öffnungswinkel ist der Winkel zu verstehen, den die geradlinig verlaufenden Seitenkanten eines in der Längsachse liegenden Längsschnitts miteinander einschließen. Es hat sich herausgestellt, daß die exakte Kegelstumpfform, d. h. die geradlinig verlaufenden Seitenkanten, gegenüber allen anderen Formen deutliche Vorteile besitzen.

Der Öffnungswinkel des dem Griffende zugewandten Griffabschnitts ist dagegen mit Vorteil größer, bspw. im Bereich von 10 bis 14, insbesondere 12°. In diesem Bereich kann auch eine ganz leichte Balligkeit des Kegelstumpfes vorgesehen sein, bspw. mit einem Krümmungsradius von etwa 30 cm, was einem Abweichen von der Geradlinigkeit von maximal etwa 1 bis 1,5 mm entspricht.

Die relativ kurze Stufe, die die beiden Griffabschnitte voneinander trennt oder miteinander verbindet, kann mit Vorteil eine in Längsrichtung des Schraubendrehers gemessene Abmessung von etwa 4 bis etwa 10 mm haben, wobei sie vorzugsweise im Bereich von 6 bis 8 mm liegt. Diese deutlich ausgeprägte Stufe wird vorzugsweise leicht verrundet, damit hier keine Kante entsteht.

Durch die Stufe werden die beiden Griffabschnitte deutlich voneinander getrennt, was die Tatsache berücksichtigt, daß die einzelnen Griffabschnitte auch unterschiedliche Funktionen haben.

Der von der Erfindung vorgeschlagene Feinschraubendreher läßt sich auf unterschiedliche Arten benutzen. Die überwiegend verwendete Benutzungsart ist diejenige, bei der der Daumen und der Zeigefinger, ggf. unter Zuhilfenahme des Mittelfingers, den Schraubendreher fingerdynamisch verdrehen, was man auch als Zwirbeln bezeichnet. Hierbei bewegt sich der Daumen, der etwa parallel zur Drehachse verläuft, quer zur Drehachse und das Ende des Zeigefingers in seiner eigenen Längsrichtung quer zur Drehachse. Dabei kann der Schraubendreher um die Breite des Daumens gedreht werden. Anschließend muß ein Nachfassen erfolgen. Während dieses Nachfassens, während also die drei ersten Finger vom Heft gelöst sind, wird der im Querschnitt größere Griffabschnitt vom Ringfinger und kleinen Finger in die Innenseite der Hand gedrückt und dort gehalten. Man kann diesen größeren Griffabschnitt daher auch als Haltezone bezeichnen.

Der Endbereich des größeren Kegelstumpfes stützt sich während des Zwirbelns und auch während des Haltens auf der Innenseite des Handtellers ab. Man kann diesen Bereich daher auch als Stützzone bezeichnen. In diesem Endbereich kann der Kegelstumpf im Längsschnitt abgerundet verlaufen, um sich besser der Mittelhand anzupassen.

Das Zwirbeln ist vorteilhaft zur Erreichung einer hohen Drehgeschwindigkeit. Der größere Durchmesser der Haltezone ermöglicht es, das kurzzeitig erforderliche höhere Drehmoment zum Anziehen oder Lösen der Schraube aufzubringen.

Um während des Zwirbelns die Handinnenfläche im Bereich der Mittelhand zu entlasten, kann erfindungsgemäß in Weiterbildung vorgesehen sein, daß dieser Griffabschnitt in seinem Endbereich feingenarbt ist, während der übrige Bereich des gesamten Griffes glatt ist. Diese feine Narbung verringert die Reibung gegenüber der Hand an dieser Stelle.

Der Schraubendreher nach der Erfindung kann aber auch so gehandhabt werden, daß eine Hand ihn an der Klinge führt und die andere am Ende des größeren Griffabschnittes zwirbelt. Dabei kann die Hand dann, wenn das größere Drehmoment erforderlich ist, im Bereich des größeren Durchmessers anfassen, um das höhere Drehmoment aufzubringen. Die Finger können auch dann in diesem Bereich anfassen, wenn eine besonders feine Einstellung durchgeführt werden soll.

In Weiterbildung der Erfindung kann der Griff an seinem klingenseitigen Ende einen durch eine kurze Stufe von dem Ende des Griffabschnitts getrennten Merkantansatz mit vergrößertem Durchmesser aufweisen. Dieser Mehrkantansatz dient nicht zum Ansetzen eines Schraubenschlüssels, sondern zum Verhindern des Wegrollens des auf eine ebene Unterlage gelegten Schraubendrehers. Der vergrößerte Durchmesser ist nicht zur Bildung einer Stufe für das Anlegen eines Fingers gedacht, sondern erforderlich, damit bei entsprechender Klingenlänge und dem gegebenen größten Durchmesser des Griffes der Ansatz überhaupt die Unterlage erreichen kann. Erfindungsgemäß kann vorgesehen sein, daß die Gesamtlänge des Griffs etwa 100 bis 110 mm beträgt. Diese Grifflänge ist von der Stärke der mit dem Schraubendreher zu schraubenden Schraube unabhängig.

Der kleinste bzw. größte Durchmesser des kleineren Griffabschnittes beträgt etwa 17 bzw. 23 mm. Es hat sich herausgestellt, daß ein derart aufgebauter Feinschraubendreher auch im Hinblick auf die zu erreichende Schraubschnelligkeit dem bekannten Feinschraubendreher mit kleinerem Durchmesser überlegen ist.

Der größere Durchmesser des griffendseitigen Abschnittes beträgt mit Vorteil etwa 32 mm, während sein kleinerer Durchmesser etwa 21 mm beträgt.

Weitere Merkmale, Einzelheiten und Vorzüge der Erfindung ergeben sich aus den Ansprüchen, der folgenden Beschreibung zweier bevorzugter Ausführungsformen der Erfindung sowie anhand der Zeichnung. Hierbei zeigen:
- Fig. 1: schematisch ein Feinschraubendreherheft nach der Erfindung in Seitenansicht,
- Fig. 2: vereinfacht die Art, wie das Schraubendreherheft nach der Erfindung in der Hand liegt,
- Fig. 3: eine Ansicht eines abgewandelten Schraubendrehers in etwa natürlicher Größe,
- Fig. 4: eine Unteransicht der Fig. 3, stark vergrößert dargestellt,
- Fig. 5: den Schnitt nach der Linie V-V in Fig. 3,
- Fig. 6: den Schnitt nach der Linie VI-VI in Fig. 4,
- Fig. 7: den Schnitt nach der Linie VII-VII in Fig. 6 und
- Fig. 8: den Schnitt nach der Linie VIII-VIII in Fig. 4 unter Veranschaulichung des Entnehmens eines Schraubendreher-Einsatzes.

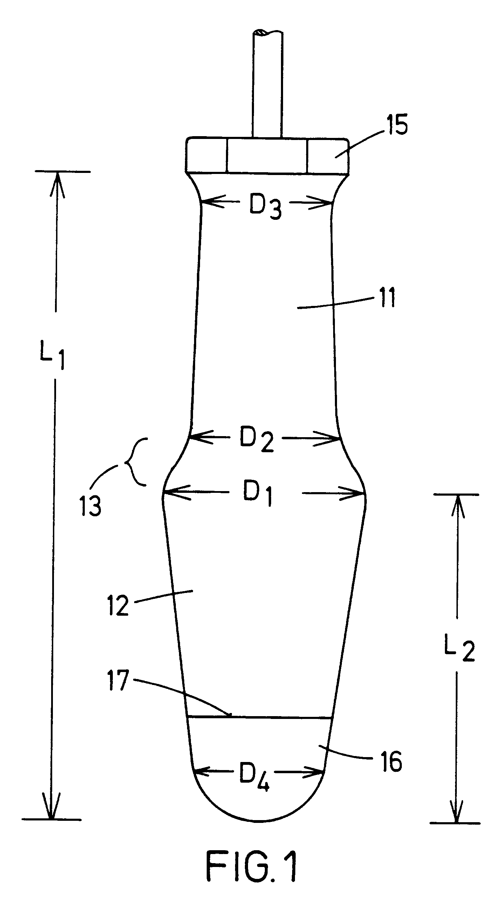

Das in Fig. 1 dargestellte Heft für einen Schraubendreher weist zwei deutlich voneinander abgesetzte Griffabschnitte 11, 12 auf, die beide die Form eines Kegelstumpfes aufweisen. Beide Griffabschnitte konvergieren von einem mittleren Bereich in Richtung auf das jeweilige Griffende. Dies bedeutet, daß die Grundflächen der Kegelstümpfe der beiden Griffabschnitte 11, 12 einander zugewandt sind. In Fig. 1 würde der Durchmesser D₂ die Grundfläche des Kegelstumpfes des klingenseitigen Griffabschnittes 11 darstellen, während der Durchmesser D₁ die Grundfläche des Kegelstumpfes des zweiten Griffabschnittes 12 darstellt. Diese beiden Grundflächen bzw. Enden der kegelstumpfförmigen Abschnitte sind durch eine relativ kurze Stufe 13 getrennt bzw. verbunden. Diese Stufe, innerhalb der die Außenkontur 14 des Griffs einen geschwungenen Verlauf nimmt, ist bspw. etwa 8 mm lang, gemessen in der Längsrichtung des Griffs. Innerhalb dieser Stufe ändert sich die Querabmessung des Griffs fast sprungartig vom Durchmesser D₂ auf den Durchmesser D₁.

Der Griffabschnitt 12 hat einen größeren Spitzenwinkel, der bspw. im Bereich von 12° liegt. Dadurch konvergiert dieser Griffabschnitt 12 in Richtung auf sein Ende stärker als der klingenseitige Griffabschnitt 11.

An dem klingenseitigen Ende des Griffabschnittes 11 schließt sich an diesen ein im Durchmesser vergrößerter Mehrkantansatz 15 an. Die Durchmesservergrößerung dieses Mehrkantansatzes 15 gegenüber dem Griffabschnitt 11 ist erforderlich, damit dieser Ansatz 15, wenn der Schraubendreher auf eine Unterlage gelegt wird, auf dieser Unterlage aufliegt. Die Durchmesservergrößerung ist also abhängig von der Klingenlänge. Die zwischen dem Griffabschnitt 11 und dem Mehrkantansatz 15 gebildete Stufe ist vorzugsweise sehr kurz, kürzer als dies in der Zeichnung angedeutet ist. Sie ist nicht dazu bestimmt, als Anlage für einen Finger zu dienen.

Im Bereich seines freien Endes ist der Griffabschnitt 12 jenseits seines kleinsten Durchmessers D₄, wo er noch konisch ist, stark verrundet. In einem Endbereich 16, der etwa einem Drittel der Länge L₂ des größeren Griffabschnittes 12 beträgt, ist die Oberfläche des Griffs mit einer feinen Narbung versehen. Die Grenze des Endabschnitts ist durch die Linie 17 in Fig. 1 angezeigt. In dem übrigen Bereich zwischen der Linie 17 und dem Mehrkantansatz 15 ist die Oberfläche beider Griffabschnitte 12 und des Zwischenbereichs 13 glatt. Auf diese Weise erhöht sich die Oberfläche und damit die Kontaktreibung zwischen der Hand und den Fingern, so daß für eine gute Übertragung des Drehmoments gesorgt wird.

Über die gesamte Länge, mit Ausnahme des Mehrkantansatzes 15, weist der Griff einen exakt kreisrunden Querschnitt auf.

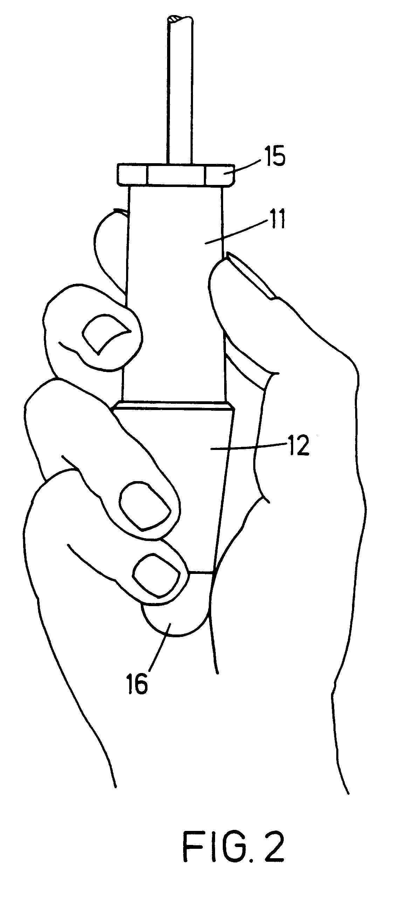

Fig. 2 zeigt eine Möglichkeit, wie der Schraubendrehergriff nach der Erfindung gehandhabt werden kann. In dem der Klinge zugewandten Griffabschnitt 11 liegen der Daumen, der Zeigefinger und unterstützend der Ringfinger an dem Griff an. Der der Klinge abgewandte Griffabschnitt 12 liegt an der Innenseite der Mittelhand an, und zwar insbesondere mit seinem Endabschnitt 16. Der Ringfinger und der kleine Finger halten diesen Abschnitt 12 fest. Der Griffabschnitt 11 bildet die Zwirbelzone, in der der Griff also mit den beiden ersten Fingern, ggf. unter Zuhilfenahme des Mittelfingers, gezwirbelt wird. Während des Zwirbelns werden der Ringfinger und kleine Finger etwas von dem Heft abgehoben, während das Ende 16 in der Mittelhand geführt wird. Ist das Ende der ohne Umsetzen möglichen Drehbewegung erreicht, halten Ringfinger und kleiner Finger den Griffabschnitt 12 fest, so daß die ersten drei Finger vom Griff gelöst und umgesetzt werden können, wonach anschließend wieder eine Zwirbelbewegung erfolgen kann. Auf diese Weise kann die Schraube so lange bewegt werden, bis am Ende der Schraubbewegung ggf. das größere Drehmoment aufgebracht werden soll. In diesem kurzen Drehbereich kann der Schraubendreher fingerstatisch benutzt werden, indem also alle Finger am Griff liegen bleiben und die kurze Drehbewegung um einen kleinen Winkel vom Handgelenk aufgebracht werden kann.

Der Schraubendreher nach der Erfindung kann aber auch bspw. mit zwei Händen bedient werden, indem bei Linkshändern die linke Hand die Klinge führt, während die rechte Hand in einer Zwirbelbewegung am Ende des größeren Griffabschnitts 12 angreift, also bspw. im Bereich der Linie 17 der Fig. 1. Hier kann beim Zwirbeln eine hohe Geschwindigkeit erreicht werden, da der Durchmesser dort klein ist. Soll dagegen eine genauere Positionierung erreicht werden, so können die Finger im Bereich des Durchmessers D₁ angreifen, wo sie aufgrund des größeren Durchmessers eine kleinere Verschwenkung der Klinge und damit eine größere Genauigkeit erreichen. Bei beiden Zwirbelarten wird der Griff fingerdynamisch bewegt. Insbesondere bei vielen Schraubvorgängen ist es für den Benutzer des Schraubendrehers wichtig, daß er die Art seines Angreifens an dem Griff abwechseln kann. Dies ist bei den bekannten Kraftschraubendrehern nicht möglich.

Diese letztgenannte Betätigungsart des Schraubendrehers ist insbesondere dann von Vorteil, wenn der Unterarm quer zur Längsachse und damit Schraubachse des Schraubendrehers liegt.

Der von der Erfindung vorgeschlagene Schraubendreher ermölgicht also ein schnelles Drehen, ein genaues Erreichen einer bestimmten Position und auch die kurzzeitig erforderliche Aufbringung eines hohen Drehmomentes. Darüber hinaus läßt er dem Bediener die Möglichkeit, unter mehreren Greifarten abzuwechseln.

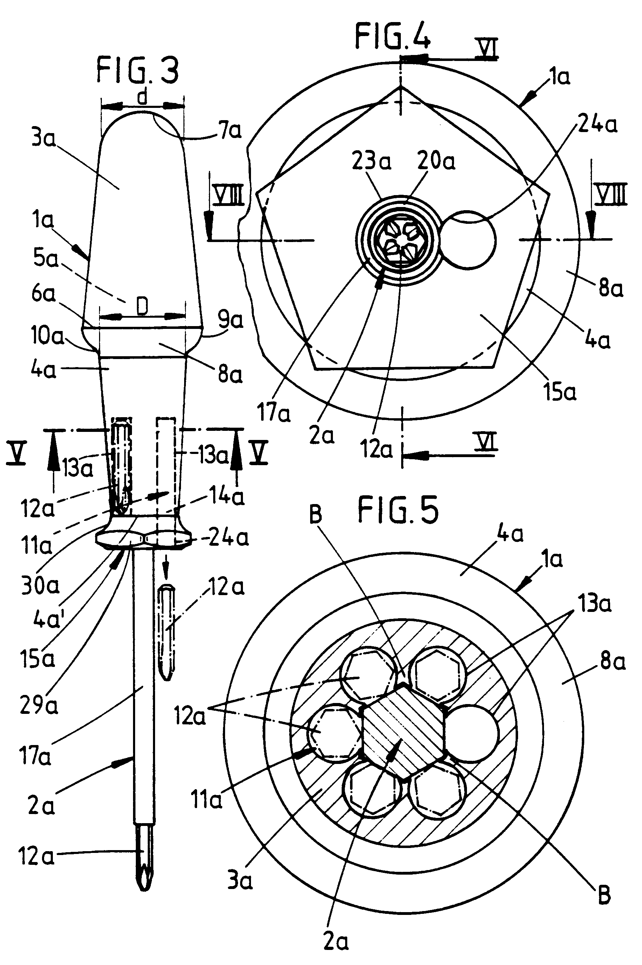

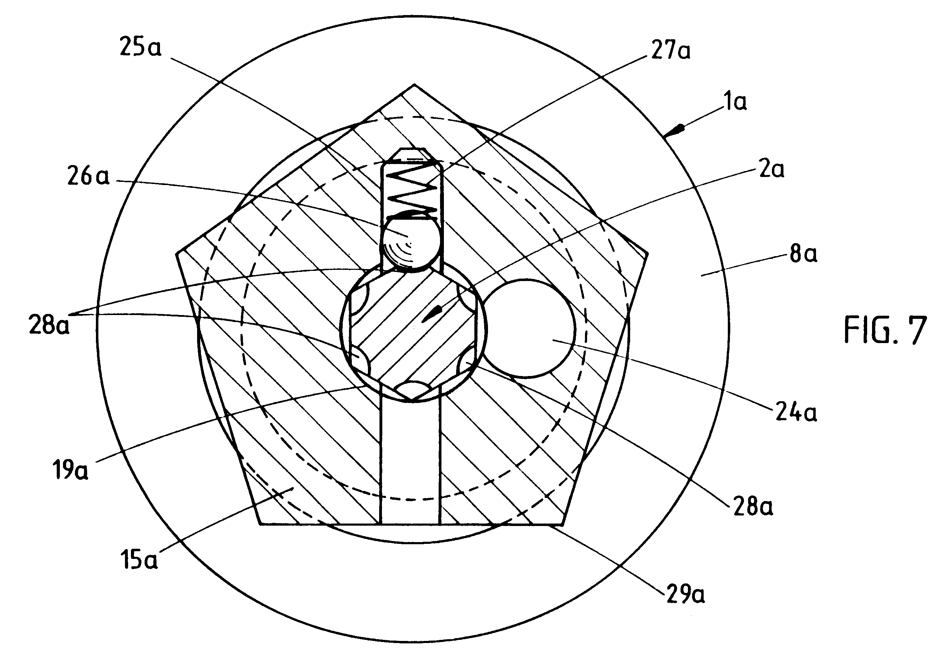

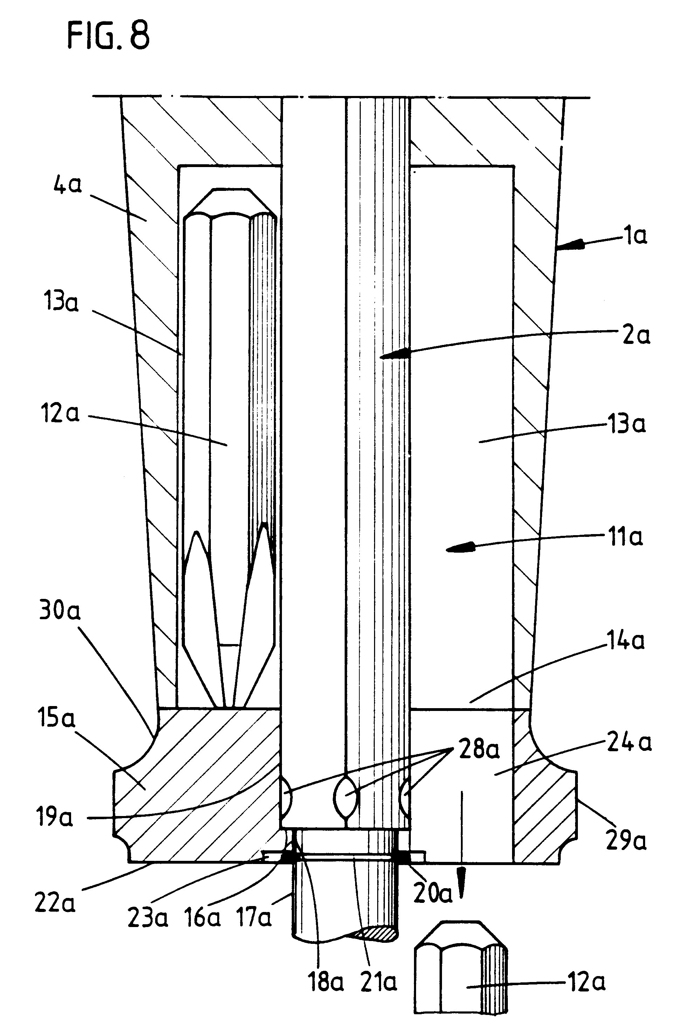

Der Schraubendreher gemäß Fig. 3 - 8 besitzt ein Heft 1a mit von diesem ausgehenden Klingenschaft 2a. Das Heft 1a setzt sich aus zwei in axialer Richtung zum Klingenschaft 2a hintereinanderliegend angeordneten Heft-Anfaßabschnitten 3a und 4a etwa gleicher Achslänge zusammen derart, daß die beiden Heft-Anfaßabschnitte 3a, 4a unter Zwischenschaltung einer Freilaufkupplung 5a in einer Drehfuge 6a aneinanderstoßen.

Aus den Figuren geht hervor, daß die Drehfuge 6a im Bereich des größten Heftquerschnittes liegt. Ferner veranschaulicht insbesondere Fig. 3, daß sich die Heft-Anfaßabschnitte 3a, 4a, ausgehend vom größten Heftquerschnitt, hinterschneidungsfrei verjüngen derart, daß der größte Durchmesser D des klingenseitigen Heftabschnittes 4a etwa dem kleinsten endseitigen Durchmesser d des kopfseitigen Heft-Anfaßabschnittes 3a entspricht. Das Kopfende 7a des Heft-Anfaßabschnittes 3a besitzt etwa die Form einer Halbkugel, um eine gute Auflagefläche in der Betätigungshand zu erhalten. Bedingt durch die Kegelstumpfform der Heft-Anfaßabschnitte 3a, 4a ist es möglich, die entsprechenden Kunststoffspritzformen ohne Längsteilungsfuge zu erstellen, was eine etwaige Nachbehandlung der gespritzten Teile erleichert.

Die zwischen den beiden Heft-Anfaßabschnitten 3a, 4a vorgesehene kurze Stufe ist als ein Umschaltring 8a zur Änderung der Freilaufrichtung der Freilaufkupplung vorgesehen. Der Kegelstumpfwinkel dieser Verjüngungsstufe entspricht etwa 90° und ist somit um ein Vielfaches größer als der der Heft-Anfaßabschnitte 3a, 4a. Demgemäß befindet sich der Umschaltring 8a in einer Verstecklage zwischen beiden Heft-Anfaßabschnitten. Der Übergang zu den Heft-Anfaßabschnitten 3a, 4a erfolgt über entsprechende Radien 9a, 10a unter Vermeidung störender Vorsprünge.

Der klingenseitige Heft-Anfaßabschnitt 4a beinhaltet ein Magazin 11a zur Aufnahme von Schraubendreher-Einsätzen 12a. Das Magazin 11a weist sechs in gleicher Umfangverteilung angeordnete, in Achsrichtung weisende Magazinaufnahmefächer 13a in Form von Sackaussparungen auf, deren Mündungsöffnungen 14a stirnseitig des Heft-Anfaßabschnittes 4a ein Drehteller 15a zugeordnet ist. Letzterer liegt unmittelbar vor der klingenseitigen Stirnseite 4a′ des Heft-Anfaßabschnittes 4a und lagert drehbar auf dem Klingenschaft 2a. Eine Lagerung erhält der Drehteller 15a dadurch, daß der im Querschnitt sechskantförmige Klingenschaft 2a unter Bildung einer Stufe 16a in einen kreiszylindrischen Abschnitt 17a übergeht. Der Drehteller 15a besitzt dementsprechend zentral eine Lagerbohrung 18a, welche von dem kreizylindrischen Abschnitt 17a durchsetzt wird. An die Lagerbohrung 18a schließt sich eine gegenüber dieser querschnittsgrößere Lageröffnung 19a an. Deren Durchmesser ist so groß wie das Eckmaß des Klingenschaftes 2a. Die Länge der Lageröffnung 19a entspricht einem Mehrfachen derjenigen der Lagerbohrung 18a. Durch die Stufe 16a erhält der Drehteller 15a eine Anschlagbegrenzung in Richtung des Heftes 1a. Das Abziehen des Drehtellers 15a vom Abschnitt 17a ist durch einen Sicherungsring 20a verhindert, der in einer Ringnut 21a des kreiszylindrischen Abschnittes 17a einliegt. Zur Aufnahme des Sicherungsringes 20a bildet der Drehteller 15a an seiner unteren Stirnseite 22a eine Aussparung 23a aus. Der Drehteller 15a ist in sechs Drehstellungen verrastbar, in welchen sein Durchbruch 24a mit einem der Magazinaufnahmefächer 13a fluchtet. Zur Verrastung dient eine in einer Radialbohrung 25a des Drehtellers 15a untergebrachte Rastkugel 26a. Eine Druckfeder 27a belastet die Rastkugel 26a in Einwärtsrichtung. Letztere wirkt zusammen mit Rastvertiefungen 28a, die in gleicher Querschnittsebene auf Höhe der Kanten des Klingenschaftmehrkantes vorgesehen sind.

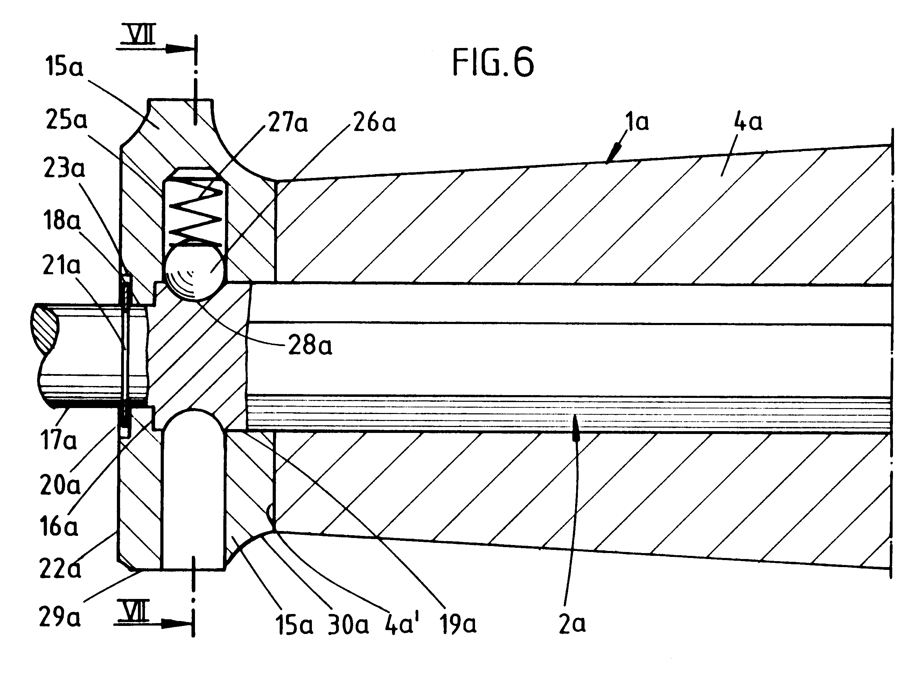

Insbesondere geht aus Fig. 5 hervor, daß die Magazinaufnahmefächer 13a in ihrem radial einwärts liegenden Bereich von der Klingenaußenfläche verschlossen sind. Dies sieht so aus, daß der verschließende Wandabschnitt des Klingenschaftes 2a ebenflächig und sekantenförmig zum im Querschnitt runden Magazinaufnahmefach 13a liegt derart, daß die Kanten des Klingenschaftmehrkantes in die Materialbereiche B zwischen die Magazinaufnahmefächer 13a greifen. Dadurch lassen sich die Magazinaufnahmefächer 13a unter Erzielung einer gedrängten Bauform in größerer Anzahl im sich verjüngenden Bereich des Heftes 1a unterbringen.

Der Drehteller 15a ist so beschaffen, daß er einen mehrkantigen Außenumfang 29a besitzt. Dieser ist in Form eines Fünfecks gestaltet und steht über den Querschnitt der Stirnfläche 4a′ des klingenseitigen Heft-Anfaßabschnittes 4a vor. Als Übergang zwischen dem Fünfeck und der Stirnfläche 4a′ dient eine ringsumlaufende Ringzone 30a des Drehtellers 15a, die stufenlos in den Heft-Anfaßabschnitt 4a übergeht. Diese Ringzone 30a kann zudem noch eine weitere Funktion übernehmen, indem sie das Abrutschen der entsprechenden Finger der Betätigungshand in Richtung der Klinge verhindert.

Der kreiszylindrische Abschnitt 17a ist an seinem Ende mit einer nicht veranschaulichten Aufnahmeöffnung zum Einstecken eines Schraubendrehereinsatzes 12a ausgestattet.

Das Entnehmen eines Schraubendreher-Einsatzes kann im Zufassungsgriff geschehen. Die Fünfeckform des Drehtellers ermöglicht ein erleichtertes Verdrehen desselben mittels des Zeigefingers der Zufassungshand in eine solche Stellung, in welcher der zu entnehmende Schraubendreher-Einsatz bzw. dessen Magazinaufnahmefach mit dem Durchbruch 24a des Drehtellers fluchtet. Dann rutscht der Schraubendreher-Einsatz 12a heraus und kann in die Gebrauchsstellung gebracht werden. Ein Verschließen des jeweiligen Magazinaufnahmefaches ist nicht erforderlich, da sich dann in diesem kein Schraubendreher-Einsatz befindet.

## Patentansprüche

1. Feinschraubendreher mit einer Klinge und einem Griff, der aus zwei aneinander angrenzenden Griffabschnitten (11, 12) besteht, die jeweils die Form eines Kegelstumpfes aufweisen, deren Grundflächen einander zugewandt sind, wobei der klingenseitige Griffabschnitt (11) die kleinere Grundfläche aufweist und die beiden Abschnitte (11, 12) durch eine kurze Übergangsstufe (13) mit einem Durchmessersprung miteinander verbunden sind, dadurch gekennzeichnet, daß die Kegelstumpf-Griffabschnitte (11, 12) auf jeder Querschnittsebene kreisrund gestaltet sind, wobei der Öffnungswinkel des der Klinge zugewandten Kegelstumpf-Griffabschnittes (11) kleiner ist als derjenige des dem anderen Griffende zugewandt liegenden Kegelstumpf-Griffabschnittes (12) und der größte Durchmesser (D1) der Übergangsstufe (13) auf mittlerer Grifflänge angeordnet ist.

2. Schraubendreher nach Anspruch 1, dadurch gekennzeichnet, daß die Gesamtlänge des Griffes etwa 100 bis 110 mm beträgt.

3. Schraubendreher nach Anspruch 1, gekennzeichnet durch einen dem klingeseitigen Ende des Griffes zugeordneten Magazin-Drehteller (15a), der eine auf der Mantelfläche des Klingenschaftes (2a) verrastende Rastkugel (26) besitzt, wobei der Klingenschaft (2a) eine Stufe (16a) für den Drehteller (15a) ausbildet, die Magazinaufnahmefächer (13a) in ihrem radial einwärts liegenden Bereich von der Klingenaußenfläche verschlossen sind und der verschließende Wandabschnitt des Klingenschaftes ebenflächig und sekantenförmig zum im Querschnitt runden Magazinaufnahmefach (13a) liegt und die Kanten des Klingenschaft-Mehrkantes in die Materialbereiche (B) zwischen den Magazinaufnahmefächern (13a) greifen.

4. Schraubendreher nach Anspruch 3, dadurch gekennzeichnet, daß der Magazinverschluß-Drehteller (15a) als Mehrkantansatz gestaltet ist.

## Claims

1. Precision screw driver with a bit and a handle consisting of two adjacent handle sections (11, 12) which each have the shape of a truncated cone whose base surfaces are facing each other, wherein the handle section (11) nearest the bit has the smallest base surface and the two sections (11, 12) are connected to each other through a short transitional stage (13) with a jump in diameter, **characterised** in that the cross-sectional plane of each truncated cone handle section (11, 12) is of circular round shape, in which the apex angle of the truncated cone handle section (11) facing the bit is smaller than the apex angle of the truncated cone handle section (12) facing the other end of the handle, and the largest diameter (D1) of the transitional stage (13) is arranged halfway down the middle of the handle.

2. Screw driver according to claim 1, **characterised** in that the total length of the handle is approximately 100 to 110 mm.

3. Screw driver according to claim 1, **characterised** by a rotary table magazine (15a), associated with the end of the handle facing the bit, which has a drop-in ball (26) locating on the surface of the bit shaft (2a), in which the bit shaft (2a) contains a step (16a) for the rotary plate (15a), the radially inward region of the magazine receptacles (13a) are closed by the outer surface of the bit and the closing wall section of the bit shaft is situated with plane surface and secant-shape to the magazine receiving compartment (13a) with the round cross-section and the edges of the polygonal bit shaft engage in the material regions (B) between the magazine receptacles (13a).

4. Screw driver according to claim 3, **characterised** in that the rotary plate magazine closure (15a) is constructed as a polygonal set.

## Revendications

1. Tournevis de précision muni d'une broche ou lame de tournevis et d'une poignée qui se compose de deux tronçons de poignée (11, 12) se délimitant l'un par rapport à l'autre et qui présentent chacun la forme d'un tronc de cône, dont les surfaces de base sont opposées l'une à l'autre, le tronçon de poignée (11) du côté de la lame de tournevis présentant la plus petite surface de base et les deux tronçons (11, 12) étant reliés par un court gradin de transition (13) en réalisant une variation rapide de diamètre l'un par rapport à l'autre, caractérisé en ce que les tronçons de poignée en tronc de cône (11, 12) présentent une forme circulaire sur chaque section transversale, en ce que l'angle d'ouverture du tronçon de poignée en forme de tronc de cône (11) tourné vers la lame de tournevis est plus petit que celui du tronçon de poignée (12) en forme de tronc de cône, qui est orientée opposée à l'autre extrémité de poignée, et en ce que le plus grand diamètre (D₁) du gradin de transition (13) est disposé à la moitié de la longueur de poignée.

2. Tournevis selon la revendication 1, caractérisé en ce que la longueur totale de la poignée atteint environ 100 à 110 mm.

3. Tournevis selon la revendication 1, caractérisé par un plateau de magasin (15a) associé à l'extrémité de la poignée située du côté de la lame de tournevis et qui comporte une bille de verrouillage (26) le verrouillant sur la surface d'enveloppe de la tige de lame de tournevis (2a), la tige de lame de tournevis (2a) formant un gradin (16a) pour le plateau rotatif (15a), par le fait que les casiers (13a) de réception de magasin sont fermés dans la surface extérieure de la lame de tournevis, au niveau de leur zone située radialement vers l'intérieur, et que le tronçon de paroi de fermeture de la tige de lame est disposé plan et a une forme sécante par rapport au casier de réception de magasin (13a) à section transversale ronde et en ce que les arêtes des pans de la tige de lame s'engagent dans la zone matérielle (B) entre les casiers de réception de magasin (13a).

4. Tournevis selon la revendication 3, caractérisé en ce que le plateau rotatif de fermeture de magasin (15a) est réalisé sous la forme d'un prolongement à plusieurs pans.
